# EUROPÄISCHE PATENTANMELDUNG

(11) **EP 1 166 974 A1**
(43) Veröffentlichungstag der Anmeldung: **02.01.2002**
(21) Anmeldenummer: 01114208.0
(22) Anmeldetag: 12.06.2001
(51) Int. Cl.: B25J 9/12, H02K 16/00, B25J 9/10, B25J 17/02

(54) **Roboterarm mit koaxialen hintereinander angeordneten Motoren**

(30) Priorität: 01.07.2000 DE 10032098
(71) Anmelder: KUKA Roboter GmbH, 86165 Augsburg (DE)
(72) Erfinder: Bohlken, Wolfgang, 86316 Friedberg (DE)
(74) Vertreter: Lempert, Jost, Dipl.-Phys. Dr. rer.nat.

(57) **Zusammenfassung**

Zur Verbesserung eines Roboterarms hinsichtlich Bauvolumen und Gewicht sieht die Erfindung einen Roboterarm mit Antrieben zur Betätigung einer Roboterhand vor, bei dem die Antriebe im Inneren des Roboterarms koaxial zu diesem hintereinander angeordnet sind. Die Antriebe sind mit zentralen Durchlässen als Getriebemotoren ausgebildet.

## Beschreibung

Die Erfindung betrifft einen Roboterarm mit Antrieben zur Betätigung einer Roboterhand.

Ein Roboterarm, der in der Regel um eine horizontale Achse, die als A3-Achse bezeichnet wird, relativ zu der Schwinge eines Roboters schwenkbar ist, weist an einem der Schwinge abgewandten Ende eine sogenannte Hand auf, die aus drei relativ zum Roboterarm um Achsen A4 bis A6 verschwenkbaren Teilen besteht. Die Bewegung um die Achsen A4 bis A6 muss durch Antriebe vorgenommen werden. Hierzu sind an dem der Hand abgewandten Ende des Roboterarms untereinander, quasi in einer Ebene, oder in einer Dreiecksanordnung drei Motoren vorgesehen, von denen Abtriebsachsen durch das Innere des Roboterarms zu der Hand führen und deren Antrieb um die drei genannten Achsen bewirken. An der Hand eines Roboters wird ein Werkzeug angesetzt, wie beispielsweise eine Schweißzange, die einen weiteren Antrieb zur Betätigung aufweisen muss. Es ist oft schwierig einen solchen weiteren Antrieb vorzusehen.

Darüber hinaus ist eine solche Ausgestaltung eines Roboterarms mit Antrieben für die Hand aufwendig, erfordert eine Reihe von Bauteilen, sowie ein großes Bauvolumen und ein hohes Gewicht.

Der Erfindung liegt daher die Aufgabe zugrunde unter Vermeidung der vorgenannten Nachteile einen Roboterarm mit Antrieben zu schaffen, der insbesondere ein geringeres Bauvolumen und ein geringeres Gewicht aufweist und darüber hinaus mit weniger Bauteilen und damit geringeren Kosten herstellbar ist.

Erfindungsgemäß wird die genannte Aufgabe mit einem Roboterarm der eingangs genannten Art gelöst, welcher dadurch gekennzeichnet ist, dass im Inneren des Roboterarm koaxial zu diesem, hintereinander Antriebe mit zentralen Durchlässen angeordnet sind.

Die Erfindung sieht also vor, dass der Roboterarm nicht seinem rückwärtigen, der Hand abgewandten Ende Antrieb, bestehend aus Motoren und zugehörigem Getriebe aufweist, sondern das diese vielmehr im Inneren des Roboterarms bzw. der diesen bildenden Struktur angeordnet sind. Damit vom rückwärtigen Ende des Roboterarms der Antrieb für ein Werkzeug und/oder jeweils von der Hand aus gesehen hinten (zur Schwinge hin) liegenden Antriebe für die Hand, zu dieser geführt werden können, sind die genannten im Roboterarm angeordneten und koaxial zu diesen ausgerichteten Antriebe und zwar sowohl den Motoren als auch dem Getriebe mit zentralen ebenfalls koaxialen Durchbrüchen versehen, durch die entsprechend andere Antriebswellen hindurchgeführt werden können.

Durch eine solche Ausgestaltung wird ein einfacher Aufbau eines Roboterarms erzielt, der weniger Bauteile und damit geringere Kosten bedingt. Darüber hinaus wird ein geringes Bauvolumen und ein geringes Gewicht erreicht. Alternativ, neben, oder zusätzlich zu Antrieben kann durch die Durchbrüche der im Roboterarm angeordneten Motoren ebenfalls eine Energiezuführung hindurchgeführt werden.

In einer bevorzugten Ausgestaltung ist vorgesehen dass die Antriebe als Getriebemotoren mit einem im Motor integrierten Getriebe ausgebildet sind. Hierdurch können die Antriebe trotz der Integration den Roboterarm als hochuntersetzende Antriebe mit integriertem Getriebe ausgebildet werden.

In weiterer bevorzugter Ausgestaltung ist vorgesehen, dass der Motor eine Hohlwelle aufweist, die den Motor mit einem Teil axial überragt und die über dieses überragende Teil mit dem Getriebe in Wirkverbindung steht und das das Getriebe eine hohle Abtriebswelle aufweist. Das Zusammenwirken der Motorwelle mit dem Untersetzungsgetriebe kann über eine Außenverzahnung des überragenden Endes der Motorwelle geschehen, oder aber über eine exzentrische Ausbildung des Außenumfanges, um die in an sich bekannter Weise über ein Lager ein Zahnring mit Außenverzahnung angeordnet ist. Das untersetzende Getriebe kann in an sich bekannter Weise mit mehreren Getriebestufen ausgebildet sein.

In einer bevorzugten Ausgestaltung ist vorgesehen, dass die Antriebe im Inneren eines hohlen, den Roboterarm bildenden Rohrelements angeordnet sind. Alternativ kann vorgesehen sein, dass der Roboterarm aus mehreren Rohrabschnitten besteht, zwischen denen die Antriebe angeordnet sind, wobei insbesondere die Rohrabschnitte über Gehäuse der Antriebe drehfest miteinander verbunden sind.

Weitere Vorteile und Merkmale der Erfindung ergeben sich aus den Ansprüchen, aus der nachfolgenden Beschreibung in der ein Ausführungsbeispiel der Erfindung unter Bezugnahme auf die Zeichnungen im einzelnen erläutert ist. Dabei zeigt:
- Fig. 1: eine schematische Darstellung eines Roboterarms mit diesem koaxial angeordneten Motoren entsprechend der Erfindung; und
- Fig. 2: eine schematische Schnittdarstellung eines entsprechend der Erfindung ausgebildeten und in einem Roboterarm angeordneten Getriebemotors mit durch diesen hin durchgeführter Abtriebswelle eines - von der Anlenkung des Roboterarmes aus gesehen - vor diesem angeordneten weiteren entsprechend ausgebildeten Getriebemotors.

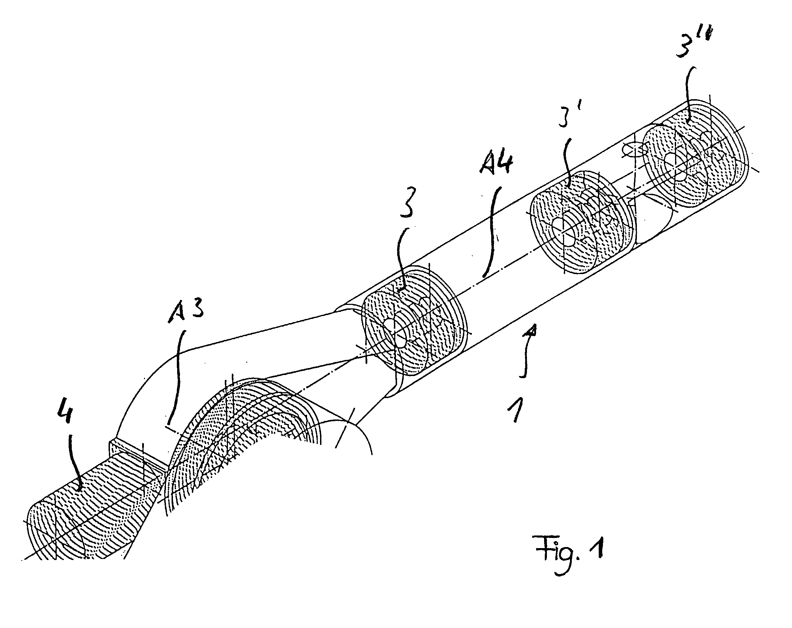

Die Figur 1 in schematischer perspektivischer Darstellung einen Roboterarm 1. Der Roboterarm 1 ist über ein Getriebe 2 mit einer Schwinge oder einem Verbindungsarm des Roboters verbunden und relativ zu dieser Schwinge um die A3-Achse verschwenkbar. Die Schwinge selbst ist über die horizontale Schwenkachse A2 mit einem Karussell des Roboters verbunden und über dieses um die vertikale A1-Achse relativ zum stationären Sockel drehbar.

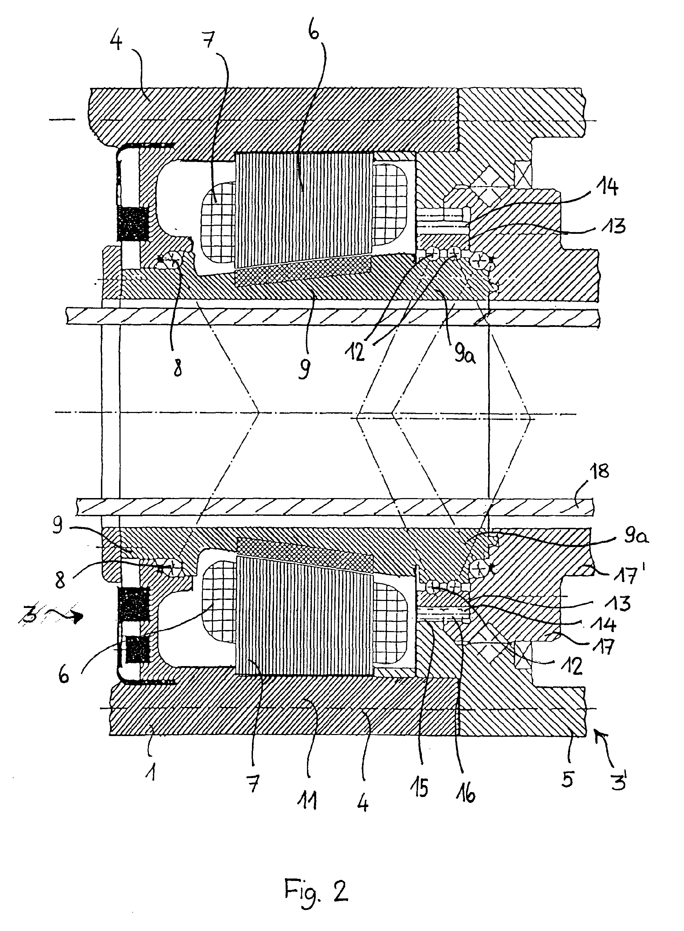

Innerhalb der Kontur des Roboterarms 1 sind entlang der Längserstreckungen desselben als Antrieb mehrere Motoren 3, 3', 3." mit integrierten Getriebe angeordnet, wie sie später unter Bezug auf die Figur 2 beschrieben werden. Die Motoren 3, 3', 3.2' sind koaxial zum Roboterarm 1 und zu dessen Achse A4 im Roboterarm 1 angeordnet. Sie weisen ebenso wie die Getriebe koaxial zur A4-Achse ausgerichtete Durchbrüche auf und beim dargestellten Ausführungsbeispiel ist am rückwärtigen Ende ein in an sich üblicher Weise Motor 4 vorgesehen, der über eine die Motoren 3, 3', 3.'' durchragende Welle, beispielsweise einen Greifer eines am Roboterarm bzw. dessen Hand (nicht vorgesehen) angebrachtes Werkzeugs betätigen kann.

Die Motoren 3, 3', 3.'' dienen zur Bewegung der, wie gesagt, nicht dargestellten Hand eines Roboters und zwar der Motor 3 zur Ausführung der Bewegung der Hand um die A4-Achse, der Motor 3'' zur Ausführung der Bewegung um die A5-Achse und der Motor 3' zur Ausführung der Bewegung um die A6-Achse. Die Ausgestaltung der Motoren 3, 3', 3.'' wird nun unter Bezug auf die Figur 2 anhand des Motors 3' näher dargestellt.

Der Motor 3' weist ein Motorgehäuse 4 und ein Getriebegehäuseteil auf, die drehfest miteinander verbunden sind und mit denen der Motor 3 ebenfalls fest im Arm 1, der im dargestellten Ausführungsbeispiel aus mehreren Abschnitten besteht, eingesetzt ist. Im Motor 3' ist ein Stator 6 mit einer Statorwicklung 7 angeordnet. Innerhalb des Motors 3', drehbar über ein Lager 8 ist eine hohle Motorwelle 9 drehbar angeordnet, die auf ihrem Außenumfang Rotormagnete 11 aufweist. Die Motorwelle 9 überragt den Stator 6 zumindestens einseitig axial mit einem Abschnitt 9a. Auf diesen Abschnitt kann außenseitig eine Verzahnung zum Zusammenwirken mit einem ebenfalls axial an einer Stirnseite des Sators angeordneten Getriebe angeordnet sein. Im dargestellten Ausführungsbeispiel ist das Getriebe derart ausgebildet, dass der überragende Teil 9a der Motorwelle 9 einen exzentrischen Außenumfang aufweist, der mit einem Lager 12 versehen ist, und um den auf diesem Lager 12 ein Zahnring 13 mit einer Außenverzahnung 14 angeordnet ist, welche einerseits einer Innenverzahnung 15 des Getriebegehäuses 5, andererseits mit der Innenverzahnung 16 einer im Getriebegehäuseteil 5 drehbar gelagerten Getriebeabtriebswelle 17 kämmt, die derart untersetzt vom Motor 3' bzw. dessen Motorwelle 9 angetrieben wird. Die Abtriebswelle 17 setzt sich über die Hohlwelle 17' fort. Durch den Motor 3' kann eine Abtriebswelle 18' des Motors 3 hindurchragen. Entsprechend kann die Abtriebswelle 17' den Durchbruch des Motors 3'' durchragen (Fig. 1).

## Patentansprüche

1. Roboterarm mit Antrieben zur Betätigung einer Roboterhand, **dadurch gekennzeichnet, dass** im Inneren des Roboterarm (1) koaxial zu diesem, hintereinander Antriebe (3, 3', 3.'') mit zentralen Durchlässen (10) angeordnet sind.

2. Roboterarm nach Anspruch 1, **dadurch gekennzeichnet, dass** die Antriebe (3, 3', 3.'') als Getriebemotoren mit einem im Motor integrierten Getriebe ausgebildet sind.

3. Roboterarm nach Anspruch 1 oder 2, **dadurch gekennzeichnet, dass** der Motor eine Hohlwelle (9) aufweist, die den Motor mit einem Teil (9a) axial überragt und die über dieses überragende Teil mit dem Getriebe in Wirkverbindung steht und das dass Getriebe eine hohle Abtriebswelle (17, 17'; 18) aufweist.

4. Roboterarm nach einem der vorangehenden Ansprüche, **dadurch gekennzeichnet, dass** die Antriebe im Inneren eines hohlen, den Roboterarm (1) bildenden Rohrelements angeordnet sind.

5. Roboterarm nach einem Ansprüche 1 bis 3, **dadurch gekennzeichnet, dass** der Roboterarm aus mehreren Rohrabschnitten besteht, zwischen denen die Antriebe angeordnet sind.

6. Roboterarm nach Anspruch 5, **dadurch gekennzeichnet, dass** die Rohrabschnitte über Gehäuse der Antriebe drehfest miteinander verbunden sind.
